# EUROPÄISCHE PATENTSCHRIFT

(11) **EP 1 240 704 B1**
(45) Veröffentlichungstag und Bekanntmachung des Hinweises auf die Patenterteilung: **20.07.2005**
(21) Anmeldenummer: 00993667.5
(22) Anmeldetag: 11.12.2000
(51) Int. Cl.: H02K 11/00

(54) **OPTISCHE MESSEINRICHTUNG IN EINEM EINGEPRESSTEN LEITERSTAB EINER ELEKTRISCHEN MASCHINE**
OPTICAL MEASURING DEVICE IN A PRESSED-IN CONDUCTING BAR OF AN ELECTRICAL MACHINE
APPAREIL DE MESURE OPTIQUE SITUE DANS UNE BARRE CONDUCTRICE COMPRIMEE DE MACHINE ELECTRIQUE

(30) Priorität: 23.12.1999 DE 19962668
(43) Veröffentlichungstag der Anmeldung: 18.09.2002
(73) Patentinhaber: SIEMENS AKTIENGESELLSCHAFT, 80333 München (DE)
(72) Erfinder: BOSSELMANN, Thomas, 91080 Marloffstein (DE); KRÄMMER, Peter, 91052 Erlangen (DE); THEUNE, Nils, 91052 Erlangen (DE); WILLSCH, Michael, 90762 Fürth (DE)
(86) Internationale Anmeldenummer: PCT/DE2000/004397
(87) Internationale Veröffentlichungsnummer: WO 2001/048894

(56) Entgegenhaltungen:
- WO-A-00/57540
- DE-A- 19 507 941
- JP-A- 2000 299 967
- PATENT ABSTRACTS OF JAPAN vol. 018, no. 399 (P-1776), 26. Juli 1994 (1994-07-26) -& JP 06 118120 A (YASKAWA ELECTRIC CORP), 28. April 1994 (1994-04-28)
- PATENT ABSTRACTS OF JAPAN vol. 1996, no. 07, 31. Juli 1996 (1996-07-31) -& JP 08 080011 A (FUJI ELECTRIC CO LTD), 22. März 1996 (1996-03-22)

## Beschreibung

Die Erfindung betrifft eine optische Messeinrichtung für ein elektrisches Gerät mit mindestens einem in eine zwei Nutseitenwände aufweisende Nut eines Grundkörpers gepressten elektrischen Leiter. Insbesondere betrifft die Erfindung eine optische Messeinrichtung für ein im Bereich der elektrischen Energieerzeugung und -verteilung eingesetztes elektrisches Gerät, wie beispielsweise einen elektrischen Generator oder einen elektrischen Transformator.

Ein solches elektrisches Gerät, das auch als energietechnisches Betriebsmittel bezeichnet wird, stellt ein sehr teueres und langlebiges Investitionsgut dar. Sein Ausfall gefährdet nicht nur das energietechnische Betriebsmittel selbst, sondern bedingt durch die mit der Reparatur verbundene Standzeit auch eine gegebenenfalls sehr hohe Verdiensteinbuße. Um dies zu vermeiden, wird zunehmend der Einsatz von einem Diagnosesystem, das beispielsweise auch eine optische Messeinrichtung umfassen kann, zur frühzeitigen Erkennung von Defekten erwogen. Das Diagnosesystem ermöglicht außerdem eine höhere Ausnutzung und damit bessere Rentabilität des energietechnischen Betriebsmittels.

Der konstruktive Aufbau des energietechnischen Betriebsmittels ist im Hinblick auf einen hohen Wirkungsgrad, geringe Wirbelstromverluste, kompakte Bauweise und gute elektrische Isolation optimiert. Deshalb sind insbesondere im aktiven Teil des energietechnischen Betriebsmittels auch keine ungenutzten Zwischen- oder Leerräume vorhanden, in denen ein Sensor ohne Aufwand für eine Umkonstruktion untergebracht werden könnte. Eine Stator- oder auch eine Rotor-Wicklung eines elektrischen Generators enthält beispielsweise eine Vielzahl von Leiterstäben, die unter hohem Druck in Nuten eines Grundkörpers, insbesondere eines Stator-Blechpakets oder eines Rotor-Körpers, gepresst werden. Dadurch ergibt sich der erwähnte kompakte Aufbau ohne nennenswerte Zwischenräume.

Die Leiterstäbe führen im Betrieb einen sehr hohen elektrischen Strom, der Werte bis in den kA-Bereich annehmen kann, so dass sie sich in beträchtlichem Umfang erwärmen. Ihre genaue Temperatur stellt deshalb eine der wichtigen Diagnoseinformationen dar. Aufgrund des hohen Potentialunterschieds zwischen den einzelnen Leiterstäben sowie zwischen den Leiterstäben und dem Grundkörper ist ein elektrischer Sensor für diese Messaufgabe ungeeignet.

In dem Übersichtsartikel "*Fiber Sensors for Industrial Applications" von M. Lequime, 12*^{*th*} *International Conference on Optical Fiber Sensors, 28.-31.10.1997, pp. 66-71,* werden deshalb verschiedene optische Messeinrichtungen für einen elektrischen Generator beschrieben, die zur Messwerterfassung jeweils mindestens einen optischen Sensor einsetzen. Im Gegensatz zu einem konventionellen elektrischen Messfühler lässt sich ein optischer Sensor nämlich auch in Gegenwart einer hohen elektrischen Spannung (typischerweise größer als einige 10 kV), eines hohen Magnetfelds (bis zu 5 Tesla) und einer aggressiven Atmosphäre (H₂ oder SF₆) sehr gut betreiben. Neben der Temperatur des unter anderem zur Kühlung der Leiterstäbe verwendeten Kühlmittels erfassen die beschriebenen optischen Messeinrichtungen auch das Vibrationsspektrum. Eingesetzt werden sowohl ein für eine singuläre Messstelle konzipierter faseroptischer Punktsensor als auch ein faseroptisches Sensornetzwerk mit mehreren Messstellen.

In dem Fachaufsatz "*A Temperature Optical Fiber Sensor Network: From Laboratory Feasibility to Field Trial*" *von H. Fevrier et al*., *8*^{*th*} *Optical Fiber Sensors Conference, 29.-31.01.1992, pp. 262-265,* wird eine optische Messeinrichtung beschrieben, die als faseroptisches Sensornetzwerk mit quasiverteilter Temperaturerfassung über die sogenannte OTDR-Technik (Optical Time Delay Reflectrometry) ausgebildet ist. Bei einem Feldtest an einem 250 MW-Generator sind mehrere optische Temperatursensoren innerhalb des Generatorgehäuses platziert worden - einige an einem amagnetischen Schutzschild auf Erdpotential und einige an einer auf Hochspannungspotential liegenden Wasserkammer des Kühlkreislaufs. Es finden sich allerdings keine Angaben über die genauen Einbauvorkehrungen für die optischen Sensoren und über die Lichtwellenleiterführung innerhalb des Generators.

Mit dem Fachaufsatz "*Industrial Prototype of a Fiber-Optic Sensor Network for the Thermal Monitoring of the Turbogenerator of a Nuclear Power Plant - Design, Qualification, and Settlement" von C. Meunier et al. in Journal of Lightwave Technology, Vol. 13, No. 7, July 1995, pp. 1354-1361,* wird eine weitere optische Messeinrichtung zur Temperaturerfassung in einem 900 MW-Turbogenerator offenbart. Das faseroptische Sensornetzwerk basiert in diesem Fall auf der sogenannten Weißlicht-Interferometrie, mit der mehrere optische Sensoren gleichzeitig abgefragt werden können. Die zur Wassertemperaturmessung bestimmten optischen Sensoren sind auf ein Wasseranschlusselement geklebt, das sich im Austrittsbereich der Kühlmittelleitung aus einem Leiter befindet. Die Applikationsstelle für die optischen Sensoren ist damit im Bereich des Wickelkopfs der Generatorwicklung angeordnet.

Darüber hinaus beschreibt die *Firma Luxtron Corp. auf der In*ternetseite *http:*//*www.luxtron.com*/*product*/*utility*/*fiber.html (Stand: 13.12.1999)* einen optischen Sensor, der auf einer temperaturabhängigen Fluoreszenz eines sensitiven Elements beruht. Der Sensor eignet sich insbesondere für eine Temperaturmessung an der Leiterwicklung eines Hochspannungs-Leistungstransformators bestimmt. Es wird jedoch nicht offenbart, wie der Temperatursensor auf die Leiterwicklung zu applizieren ist, und auch nicht, wie der zuführende Lichtwellenleiter innerhalb des Leistungstransformators zu verlegen ist.

Weiterhin ist aus der *EP 0 071 561 A2* allgemein bekannt, eine Betriebsanlage mittels Lichtwellenleitern zu überwachen. Mit der *WO 98*/*31987 A1* wird außerdem offenbart, eine Messgröße mittels eines als Faser-Bragg-Gitter-Sensor ausgebildeten optischen Sensors zu erfassen. Der Faser-Bragg-Gitter-Sensor ist dabei an einer elektrischen Pumpe innerhalb eines (Erdöl-)Bohrlochs angebracht und mit einer Auswerteeinheit an der Erdoberfläche verbunden.

Mit diesen bekannten optischen Messeinrichtungen ist somit entweder nur eine indirekte Messgrößenerfassung, wie zum Beispiel bei der Temperaturbestimmung im Kühlmittelkreislauf möglich, oder es fehlen konkrete Angaben darüber, wie der optische Sensor und der zuführende Lichtwellenleiter für eine direkte Messgrößenerfassung beispielsweise an dem zu überwachenden Leiter oder an der zu überwachenden Leiterwicklung anzuordnen sind.

Das Dokument PATENT ABSTRACTS OF JAPAN vol. 018, Nr. 399 (P-1776), 26. Juli 1994, & JP 06 118120 A (YASKAWA ELECTRIC CORP), 28. April 1994 offenbart eine optische Meßeinrichtung für eine elektrische Maschine mit einem Stator und einem Rotor. Der Statorkern ist mit Längsnuten versehen, wobei die Nuten offensichtlich je zwei Nutseitenwände aufweisen. Mindestens ein aus einer Vielzahl gegeneinander isolierter Teilleiter zusammengesetzter elektrischer Leiter wird in eine Nut gepreßt. Die optische Meßeinrichtung umfaßt einen optischen Sensor. Ein erster Lichtwellenleiter verbindet den Sensor mit einer Lichtquelle und ein zweiter Lichtwellenleiter führt das Licht vom Sensor zu einer Auswerteeinheit. Der optische Sensor und die sensornahen Teile der Lichtwellenleiter sind im Bereich der Nut an einer der schmalen Längsseiten des elektrischen Leiters angeordnet.

Aus dem Dokument PATENT ABSTRACTS OF JAPAN vol. 1996, Nr. 07, 31. Juli 1996 & JP 08 080011 A (FUJI ELECTRIC CO LTD), 22. März 1996 ist eine optische Meßeinrichtung bekannt, die optische Temperatursensoren und dazugehörige Lichtwellenleiter aufweist, wobei der optische Sensor und ein sensornaher Teil des Lichtwellenleiters im Bereich der Nut zwischen den einzelnen elektrischen Teilleitern angeordnet sind.

Die Offenlegungsschrift DE 195 07 941 A (ASTA ELEKTRODRAHT GMBH), 14. September 1995 offenbart ebenfalls einen aus einer Vielzahl gegeneinander isolierter Teilleiter zusammengesetzten elektrischen Leiter, bei dem mindestens ein Teilleiter mit einem in einer Nut eingebetteten glasfaseroptischen Verteilungsfühler versehen ist.

Die Aufgabe der Erfindung ist es nun, eine optische Messeinrichtung für ein elektrisches Gerät mit mindestens einem in eine zwei Nutseitenwände aufweisende Nut eines Grundkörpers gepressten elektrischen Leiter anzugeben, so dass eine möglichst unmittelbare Erfassung der Messgröße an dem elektrischen Leiter möglich ist. Dabei soll die Funktionsweise des elektrischen Geräts möglichst wenig beeinflusst werden. Außerdem soll keine Umkonstruktion des elektrischen Geräts erforderlich sein, um die optische Messeinrichtung betreiben zu können.

Zur Lösung der Aufgabe wird eine optische Messeinrichtung entsprechend den Merkmalen des Patentanspruchs 1 angegeben.

Die erfindungsgemäße optische Messeinrichtung für ein elektrisches Gerät mit mindestens einem in eine zwei Nutseitenwände aufweisende Nut eines Grundkörpers gepressten elektrischen Leiter aus einer Vielzahl gegeneinander isolierter Teilleiter umfasst
- mindestens einen optischen Sensor,
- mindestens einen mit dem optischen Sensor verbundenen Lichtwellenleiter, über den der optische Sensor mittels eines Lichtsignals abfragbar ist, und
- eine optisch mit dem optischen Sensor verbundene Auswerteeinheit, wobei
- der optische Sensor und ein sensornaher Teil des Lichtwellenleiters im Bereich der Nut an einer von den beiden Nutseitenwänden abgewandten Längsseite des elektrischen Leiters angeordnet sind und
- an der Längsseite mindestens eine von der Teilleiterisolierung gesondert ausgebildete Schutzleiste angeordnet ist.

Die Erfindung beruht dabei auf der Erkenntnis, dass der optische Sensor und der sensornahe Teil des Lichtwellenleiters an der Längsseite in sehr engen räumlichen Kontakt zu dem Leiter gebracht werden können, ohne dass damit eine Verschlechterung des Betriebsverhaltens des elektrischen Geräts einhergeht. Die als besonders vorteilhaft erkannte Applikationsstelle für den optischen Sensor und den zuführenden Lichtwellenleiter ermöglicht damit erstmalig eine direkte Messgrößenerfassung an einem Leiter eines insbesondere als energietechnisches Betriebsmittel ausgebildeten elektrischen Geräts. Gleichzeitig erfordert diese Applikationsstelle keine Umkonstruktion des bestehenden elektrischen Geräts. Es wurde erkannt, dass die erfindungsgemäße Lösung gegenüber anderen Applikationsstellen an dem Leiter hinsichtlich der mechanischen Belastung des optischen Sensors und des zuführenden Lichtwellenleiters und auch hinsichtlich einer gegebenenfalls erforderlichen Umkonstruktion entscheidende Vorteile aufweist.

Die Applikationsstelle an der Längsseite verhindert, dass bei der Fierstellung und im Betrieb des elektrischen Geräts eine unzulässig hohe mechanische Belastungen auf den optischen Sensor und auf den Lichtwellenleiter einwirkt. Verglichen mit der von den Nutseitenwänden abgewandten Längsseite tritt nämlich an den Nutseitenwänden zugewandten Kontaktseiten des Leiters eine deutlich höhere mechanische Belastung auf. Der Anpressdruck wirkt nämlich in den meisten Fällen insbesondere auf diese Kontaktseiten des Leiters. Das Anbringen des optischen Sensors und des Lichtwellenleiters an der Längsseite kann außerdem sehr spät in dem Fertigungsablauf erfolgen, wodurch eine möglichst geringe mechanische Belastung des optischen Sensors und des Lichtwellenleiters auch während der Fertigung begünstigt wird.

An der Längsseite ist zusätzlich mindestens eine von der Teilleiterisolierung gesondert ausgebildete Schutzleiste angebracht. Diese trägt dazu bei, die mechanische Belastung des optischen Sensors und des Lichtwellenleiters im sensornahen Teil weiter zu reduzieren. Eine beim Einpressen des Leiters in die Nut auf die Längsseite einwirkende Kraft wird durch diese Schutzleiste von dem optischen Sensor und dem sensornahen Teil des Lichtwellenleiters ferngehalten. Die Schutzleiste besteht aus einem bis mindestens 180°C hitzebeständigen Material, wie z.B. Capton. Sie kann aber ebenso aus einem Verbundwerkstoff bestehen, der mindestens eines der Materialien Kunststoff, Kohlefasern und Keramik umfasst. Ein Beispiel für einen solchen Verbundwerkstoff ist ein glasfaserverstärkter Kunststoff (GFK) oder ein mit Quarzmehl gefülltes Epoxid. Das Quarzmehl bewirkt dabei eine Anpassung des mechanischen insbesondere des thermischen Verhaltens der Schutzleiste an das des Lichtwellenleiters, der üblicherweise aus Quarzglas gefertigt ist. Außerdem kann auch ein Nomex-Band für die Schutzleiste verwendet werden.

Besondere Ausgestaltungen der optischen Messeinrichtung ergeben sich aus den abhängigen Ansprüchen.

Günstig ist es, den optischen Sensor und den sensornahen Teil des Lichtwellenleiters zwischen zwei nebeneinander an der Längsseite angeordneten Schutzleisten zu platzieren. Die beiden Schutzleisten sind dabei seitlich nebeneinander angeordnet und verlaufen jeweils parallel zur Längsseite des Leiters. Der optische Sensor und der Lichtwellenleiter, die im Folgenden mit dem Sammelbegriff "optische Komponenten" bezeichnet werden, befinden sich dann in einem Zwischenraum zwischen den beiden Schutzleisten. Die Schutzwirkung für die optische Komponenten ist dann besonders günstig.

Eine ähnlich günstige Schutzwirkung erhält man bei zwei anderen Ausführungsformen der Schutzleiste, bei denen der optische Sensor und der sensornahe Teil des Lichtwellenleiters zumindest teilweise oder komplett von der Schutzleiste umgeben sind. Im erstgenannten Fall hat die Schutzleiste an einer Oberfläche eine Öffnung beispielsweise in Form einer in Längsrichtung verlaufenden Nut oder Kerbe, in die der optische Sensor und der sensornahe Teil des Lichtwellenleiters einfach eingelegt werden können. Im zweitgenannten Fall sind der optische Sensor und der sensornahe Teil des Lichtwellenleiters vollständig in die Schutzleiste eingebettet. Ein hierfür besonders geeigneter Aufbau der Schutzleiste umfasst zwei zusammensetzbare Schutzleistenhälften, von denen eine mit einer in Längsrichtung verlaufenden Kerbe zur Aufnahme des sensornahen Teils des Lichtwellenleiters versehen sein kann.

Außerdem gibt es eine Ausführungsvariante, bei der der optische Sensor auf einem Träger befestigt ist, und zusammen mit diesem Träger in einer extra hierfür in der Schutzleiste vorgesehenen Aussparung angeordnet ist. Diese Fixierung des optischen Sensors auf dem Träger führt zu einer verbesserten Sensorgenauigkeit, insbesondere wenn der Träger aus Quarzglas besteht und damit das gleiche Wärmeausdehnungsverhalten aufweist wie der Lichtwellenleiter.

Bei einer weiteren bevorzugten Ausführungsform werden zumindest der sensornahe Teil des Lichtwellenleiters und auch der optische Sensor innerhalb eines zusätzlichen Röhrchens, das günstigerweise auch aus einem bis mindestens 180°C hitzebeständigen Material, insbesondere wieder aus Quarzglas besteht, angeordnet. Das Röhrchen dient einem zusätzlichen mechanischen Schutz der optischen Komponenten.

Bei einer weiteren vorteilhaften Ausführungsform gehört der Leiter zu einer Stator-Wicklung, beispielsweise eines elektrischen Generators. Besonders günstig ist es, wenn die Längsseite des Leiters, an der sich der optische Sensor und der Lichtwellenleiter befinden, einem Rotor des elektrischen Generators zugewandt ist. Der optische Sensor und der Lichtwellenleiter befinden sich dann im Bereich eines bei einem solchen elektrischen Generator stets vorhandenen Luftspalts. An dieser Stelle lassen sich die optischen Komponenten ohne eine Umkonstruktion des elektrischen Generators unmittelbar an dem Leiter anordnen. Diese Applikationsstelle hat außerdem den zusätzlichen Vorteil, dass dieser Bereich des Leiters während des Betriebs elektrisch und mechanisch stark belastet ist, und eine direkte Messinformation aus diesem Bereich deshalb besonders wertvoll für eine Generatordiagnose ist.

Es ist jedoch auch möglich, dass der Leiter Bestandteil einer Rotor-Wicklung eines elektrischen Generators ist. Wegen der im Rotor auftretenden hohen Zentrifugalkräfte ist die Nut im Rotor-Grundkörper, in die der Leiter ebenfalls wieder eingepresst ist, auf der dem Stator zugewandten Seite üblicherweise zusätzlich mit einem Klemmkeil versehen. Während des Betriebs kann der Leiter nun aufgrund der Zentrifugalkräfte mit hohem Druck gegen diesen Klemmkeil gepresst werden. Deshalb ist es bei einer solchen Rotor-Wicklung günstiger, den optischen Sensor und den sensornahen Teil des Lichtwellenleiters auf einer vom Stator und auch von den Nutseitenwänden abgewandten Längsseite des Leiters anzuordnen. An dieser Stelle, d.h. insbesondere einem Nutboden zugewandt, ist die mechanische Belastung dann am geringsten.

Eine andere vorteilhafte Ausgestaltung zeichnet sich dadurch aus, dass sich der optische Sensor und der sensornahe Teil des Lichtwellenleiters unterhalb einer äußeren elektrischen Isolation des Leiters befinden. Da zwischen dem Grundkörper und dem Leiter eine Potentialdifferenz von bis zu mehreren 10 kV bestehen kann, hat der Leiter eine entsprechende äußere elektrische Isolation mit einer entsprechend hohen dielektrischen Festigkeit. Um nun eine möglichst gute Ankopplung des optischen Sensors an den Leiter zu erreichen, ist eine Anordnung unterhalb der äußeren elektrischen Isolation besonders vorteilhaft. Dies trifft insbesondere bei einer Temperaturmessung an dem Leiter zu.

Da der optische Sensor und auch der Lichtwellenleiter nur aus dielektrischem Material bestehen, ergibt sich durch eine Anordnung unterhalb der äußeren elektrischen Isolation auch keine Verschlechterung der dielektrischen Festigkeit. Die äußere elektrische Isolation kann beispielsweise eine mehrlagige und insbesondere mit einem Epoxid-Harz getränkte Wicklung aus einem Isolationsband enthalten. Vorzugsweise wird der Lichtwellenleiter im Bereich des Grundkörpers unterhalb der äußeren elektrischen Isolation geführt und im Bereich eines sogenannten Wickelkopfs, der außerhalb des Grundkörpers liegt und der der elektrischen Verschaltung mehrerer in den Grundkörper gepresster Leiterstäbe dient, durch die äußere elektrische Isolation hindurchgeführt. Um die mechanische Belastung möglichst gering zu halten, werden die optischen Komponenten vorteilhafterweise erst unmittelbar vor Aufbringen der äußeren elektrischen Isolation an der Längsseite des Leiters angebracht.

Besonders günstig ist es, wenn der optische Sensor als Faser-Bragg-Gitter-Sensor, der durch Einschreiben eines Bragg-Gitters in den Lichtwellenleiter hergestellt werden kann, ausgebildet ist. Die geometrischen Abmessungen eines solchen vorteilhaften Faser-Bragg-Gitter-Sensors werden im wesentlichen durch den verwendeten Lichtwellenleiter bestimmt. Der folglich äußerst geringe Platzbedarf des Faser-Bragg-Gitter-Sensors erleichtert seine Montage an der Längsseite des Leiters. Weiterhin ist es vorteilhaft, dass zur Erfassung der Messgröße keine Ein- und Auskopplung eines Lichtsignals aus dem Lichtwellenleiter erforderlich ist. Die Lichtführung erfolgt bei einem Faser-Bragg-Gitter-Sensor stets innerhalb des Lichtwellenleiters, wodurch eine besonders unempfindliche Messgrößenerfassung ermöglicht wird.

Der eingesetzte optische Sensor kann zur Erfassung verschiedener Messgrößen ausgebildet sein. Besonders einfach und gleichzeitig auch für die Generatordiagnose sehr nützlich ist die Ausgestaltung als faseroptischer Temperatursensor. Die unmittelbar am Leiter erfasste Temperatur stellt nämlich eine wichtige Information für ein Diagnosesystem zur Zustandsüberwachung des elektrischen Geräts dar. Der optische Sensor kann jedoch auch zur Erfassung einer anderen Messgröße, beispielsweise eines mechanischen Vibration oder einer mechanischen Beschleunigung, ausgelegt sein.

Die optische Messeinrichtung kann insbesondere auch mehrere optische Sensoren und mehrere Lichtwellenleiter fassen. Durch ein solches Sensor-Netzwerk erhält man dann Informationen von vielen verschiedenen Messstellen innerhalb des elektrischen Geräts, so dass sich eine fundierte Diagnose über den Zustand des elektrischen Geräts erstellen lässt.

Bevorzugte Ausführungsbeispiele der erfindungsgemäßen optischen Messeinrichtung werden nunmehr anhand der Zeichnung näher erläutert. Zur Verdeutlichung ist die Zeichnung nicht maßstäblich ausgeführt und gewisse Merkmale sind schematisiert dargestellt. Im Einzelnen zeigen:
- Figur 1: eine optische Messeinrichtung für einen elektrischen Generator,
- Figur 2: einen Querschnitt durch einen Stator und einen Rotor des elektrischen Generators von Figur 1,
- Figuren 3 und 4: jeweils einen Querschnitt durch einen Leiter einer Wicklung des elektrischen Generators von Figur 1,
- Figuren 5 bis 7: in Schutzleisten integrierte optische Sensoren und Lichtwellenleiter,
- Figur 8: ein Lichtwellenleiter mit integrierten optischen Sensoren und
- Figur 9: ein innerhalb eines Röhrchens angeordneter Lichtwellenleiter

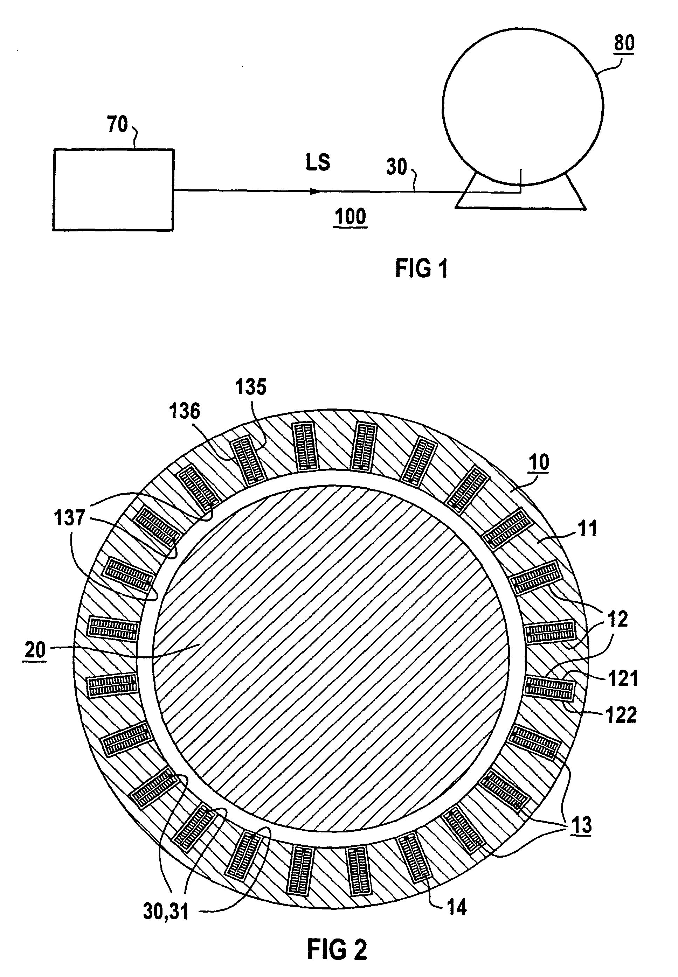

Einander entsprechende Teile sind in den Figuren 1 bis 9 mit denselben Bezugszeichen versehen.

In Figur 1 ist eine optische Messeinrichtung 100 für ein als elektrischer Generator 80 ausgebildetes elektrisches Gerät dargestellt, die zur optischen Messgrößenerfassung innerhalb des Generators 80 bestimmt ist. Die optische Messeinrichtung 100 enthält eine außerhalb des Generators 80 angeordnete Auswerteeinheit 70, die über einen Lichtwellenleiter 30 mit einem nicht näher dargestellten Innenraum des Generators 80 optisch verbunden ist. Es können auch mehrere Lichtwellenleiter vorgesehen sein. Mittels eines über den Lichtwellenleiter 30 übertragenen Lichtsignals LS wird mindestens eine optische Messstelle im Innenraum des Generators abgefragt.

Der in Figur 1 dargestellte elektrische Generator ist für eine hohe elektrische Leistung insbesondere von mehr als 100 MW ausgelegt. Im Generator treten Ströme von bis zu einigen kA und Potentialunterschiede von bis zu mehreren 10 kV auf. Anstelle des gezeigten elektrischen Generators 80 kann die optische Messeinrichtung 100 jedoch ebensogut für eine elektrodynamische Antriebsmaschine, wie z.B. ein Synchron- oder auch Asynchronmotor, die in ihrem konstruktiven Aufbau dem des elektrischen Generators 80 sehr ähnlich ist, eingesetzt werden. Ebenso gut lässt sich die optische Messeinrichtung 100 auch für einen Hochspannungs-Leistungstransformator, dessen Betriebsspannung sogar bis zu einigen 100 kV betragen kann, einsetzen.

Mit dem Lichtwellenleiter 30 lässt sich eine so große Potentialdifferenz bei Bedarf problemlos ohne großen Zusatzaufwand überbrücken. Die eingesetzten optischen Komponenten beeinträchtigen die dielektrische Festigkeit des elektrischen Generators 80 nicht.

In Figur 2 sind ein Stator 10 und ein Rotor 20 des Generators 80 im Querschnitt dargestellt. Der Stator 10 enthält eine Stator-Wicklung 14, die sich unter anderem aus mehreren Leitern 13 zusammensetzt. Die hier als Leiterstäbe ausgebildeten Leiter 13 sind innerhalb eines Stator-Blechpakets 11 angeordnet. Sie werden unter hohem Druck in Nuten 12 des Stator-Blechpakets 11 eingepresst. Die optische Messeinrichtung 100 dient nun insbesondere der Erfassung einer Messgröße unmittelbar an einem der in Figur 2 gezeigten Leiter 13.

In der Querschnittsdarstellung von Figur 2 sind auch mehrere sensornahe Teile 31 des Lichtwellenleiters 30 eingezeichnet. Sie sind an dem Rotor 20 zugewandten Längsseiten 137 der Leiter 13 angeordnet und befinden sich im Bereich des nicht näher gekennzeichneten Luftspalts zwischen dem Stator 10 und dem Rotor 20. Diese Applikationsstelle zeichnet sich auch durch eine vergleichsweise niedrige mechanische Belastung des sensornahen Teils 31 des Lichtwellenleiters 30 aus. Demgegenüber wirkt auf seitliche Kontaktseiten 135 und 136 des Leiters 13 eine wesentlich höhere mechanische Kraft. Die Kontaktseiten 135 und 136 sind dabei jeweils einer Nutseitenwand 121 bzw. 122 zugewandt. Bereits beim Einpressen des Leiters 13 treten an den Kontaktseiten 136 und 135 hohe mechanische Belastungen auf, die zu einer Zerstörung jedes an dieser Stelle angebrachten Lichtwellenleiters 30 führen würde.

Bei nicht dargestellten anderen optischen Messeinrichtungen ist der Lichtwellenleiter 30 an einer Längsseite eines Leiters, der Bestandteil einer Rotor-Wicklung des Generators 80 ist oder der Bestandteil einer Wicklung eines elektrischen Leistungstransformators ist, angeordnet.

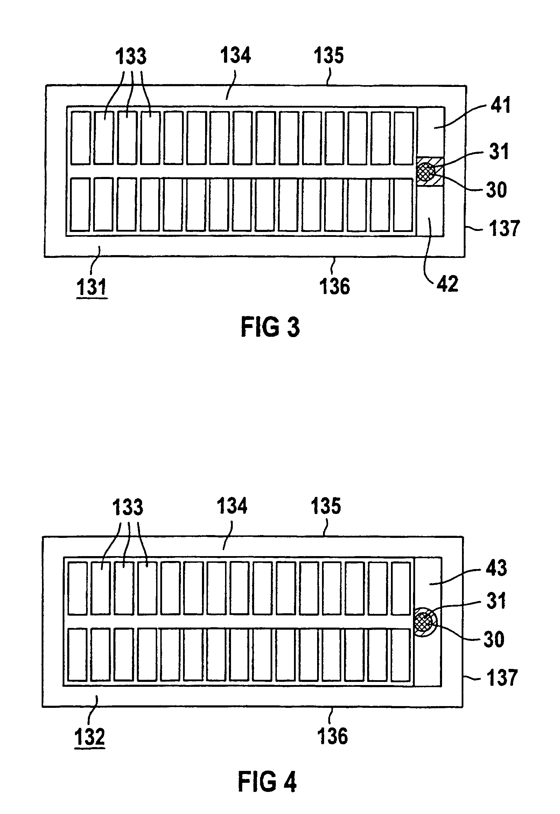

Die Figuren 3 und 4 zeigen jeweils eine vergrößerte Querschnittsdarstellung eines Leiterstabs 131 bzw. 132 der Stator-Wicklung 14. Beide Leiterstäbe 131 und 132 haben hier einen rechteckigen Querschnitt und setzen sich aus einer Vielzahl einzelner Teilleiter 133 zusammen. In anderen nicht gezeigten Ausführungbeispielen können die Nut 12 und damit auch die eingepressten Leiterstäbe 131 und 132 eine andere, beispielsweise eine trapez-, eine V- oder eine U-förmige Querschnittsgeometrie aufweisen. Die Teilleiter 133 bestehen aus Kupfer und sind zur Reduktion unerwünschter Wirbelströme gegeneinander isoliert. Aus dem gleichen Grund sind die Leiterstäbe 131 und 132 als sogenannte Roebelstäbe oder Roebelleiter ausgebildet. Die Teilleiter 133 werden dazu systematisch so transponiert, dass jeder Teilleiter 133 jeden Teilplatz im rechteckigen Querschnitt mindestens einmal im Längsverlauf des Roebelstabs innehat. Die Gesamtheit aller Teilleiter 133 ist von einer gemeinsamen äußeren elektrischen Isolation 134 umgeben. Zwischen den Teilleitern 133 und der äußeren Isolation 134 ist an der Längsseite 137 das sensornahe Teil 31 des Lichtwellenleiters 30 angeordnet. Auch ein in der Querschnittsdarstellung der Figuren 3 und 4 nicht gezeigter optischer Sensor befindet sich an dieser Stelle.

Zum Schutz vor mechanischen Belastungen ist der sensornahe Teil 31 des Lichtwellenleiters 30 sowie auch der nicht dargestellte optische Sensor entweder zwischen zwei Schutzleisten 41 und 42 oder innerhalb einer Schutzleiste 43 angeordnet. Die vorzugsweise aus hitzebeständigem Capton bestehenden Schutzleisten 41 bis 43 erfüllen die Aufgabe, eine auf die Längsseite 137 einwirkende mechanische Kraft aufzunehmen und insbesondere von dem sensornahen Teil 31 des Lichtwellenleiters 30 oder dem nicht dargestellten optischen Sensor fernzuhalten. Dadurch ergibt sich eine weiter reduzierte mechanische Belastung der an dieser Stelle platzierten optischen Komponenten.

Ein in den Figuren 3 und 4 schraffierter jedoch nicht näher bezeichneter Zwischenraum zwischen dem Lichtwellenleiter 30 und den Schutzleisten 41 bis 43 kann je nach Bedarf auch mit einem spannungsfesten Dielektrikum, beispielsweise einem Silicon, einem SF₆-Gas oder einem Schaumstoff, gefüllt sein. Diese spannungsfeste dielektrische Füllung dient dann insbesondere der Vermeidung unerwünschter Teilentladungen in diesem Zwischenraum.

Die Schutzleisten 41 und 42 haben hier jeweils eine durch den Leiterstab 131 bestimmte Breite von etwa 8 mm und eine durch den verwendeten Lichtwellenleiter 30 bestimmte Höhe, die sich zwischen 0,1 und 3 mm beläuft. Um den Platzbedarf möglichst gering zu halten, wird die Höhe der Schutzleisten so klein wie möglich gewählt. Typische Werte für die Höhe sind 0,5 mm, 1 mm oder 1,5 mm. Die Schutzleisten 41 und 42 können insbesondere jeweils auch aus einem Nomex-Band bestehen, das die genannten Höhenabmessungen aufweist. Die Höhenangaben gelten entsprechend auch für die Schutzleiste 43. Die Schutzleisten 41 und 43 sind im gezeigten Beispiel genauso lang wie die Nut 12. Bei Bedarf können die Schutzleisten 41 und 43 jedoch auch kürzer ausgebildet sein.

Durch die den stromdurchflossenen Teilleitern 133 unmittelbar benachbarte Anordnung des optischen Sensors ergibt sich eine sehr hohe Messgenauigkeit. Die eng benachbarte Anordnung bringt eine sehr gute thermische Ankopplung mit sich, so dass insbesondere die Leitertemperatur des Leiterstabs 131 oder 132 sehr genau erfasst werden kann. Die erreichbare Genauigkeit ist deutlich besser als bei einer indirekten Messung der Wassertemperatur im Kühlmittelkreislauf. Die günstige Anordnung der optischen Komponenten unterhalb der äußeren elektrischen Isolation 134 trägt außerdem zur Vermeidung von unerwünschten Effekten, wie Hysterese oder Offset-Fehler, die sich ansonsten bei einer Anordnung auf der äußeren elektrischen Isolation 134 einstellen könnten, bei. Gleichzeitig wird die dielektrische Festigkeit des isolierten Leiterstabs 131 oder 132 durch den unterhalb der äußeren elektrischen Isolation 134 angeordneten Lichtwellenleiter 30 nicht maßgeblich beeinträchtigt, da der Lichtwellenleiter 30 aus dielektrischem Material besteht.

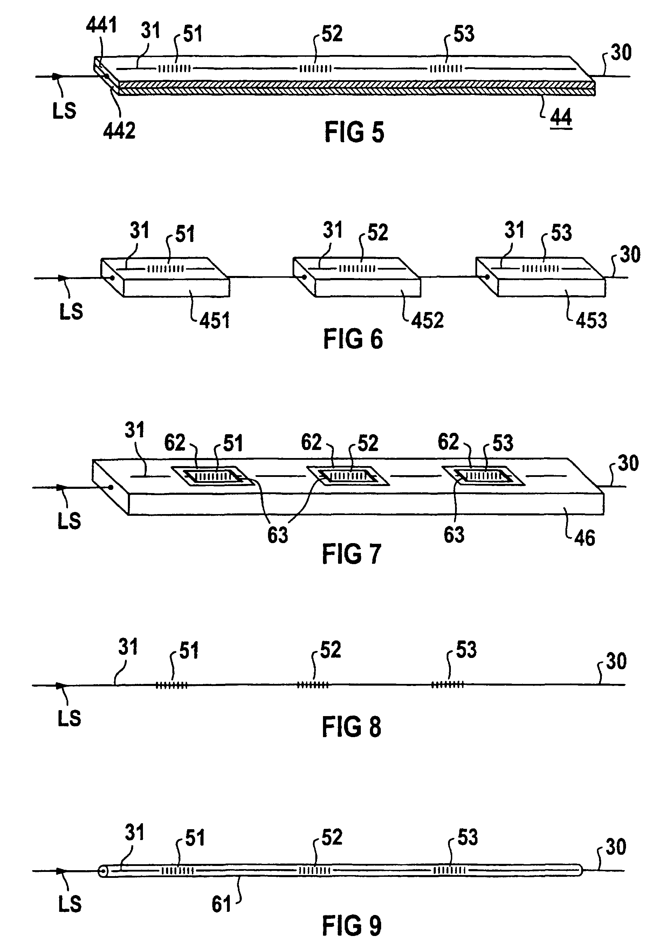

Weiterhin ist es gemäß Figur 5 auch denkbar, dass der Lichtwellenleiter 30 in seinem sensornahen Teil 31, der hier beispielhaft auch drei optische Sensoren 51, 52 und 53 beinhaltet, komplett in eine Schutzleiste 44 eingebettet ist. Die Schutzleiste 44 besteht aus zwei zusammengefügten Schutzleistenhälften 441 und 442. Der Lichtwellenleiter 30 ist in eine nicht dargestellte Kerbe in einer der beiden Schutzleistenhälften 441 und 442 eingelegt.

Falls ein größerer Abstand zwischen den einzelnen Sensoren 51 bis 53 erforderlich ist, kann die Schutzleiste gemäß Figur 6 auch aus mehreren Teilschutzleisten 451, 452 und 453, die dann jeweils einen oder mehrere der optischen Sensoren 51 bis 53 aufnehmen, aufgebaut sein. Dadurch wird die Flexibilität im Hinblick auf den Ort der Messstellen an dem Leiter 13 erhöht. Gegebenenfalls kann damit ein Lichtwellenleiter 30 auch zur Messgrößenerfassung an mehreren Leitern 13 eingesetzt werden.

Im Ausführungsbeispiel von Figur 7 sind die optischen Sensoren 51 bis 53 jeweils auf einem Träger 63 aus Quarzglas fixiert. Wegen der vergleichbaren Wärmeausdehnungskoeffizienten erhöht dies die Messgenauigkeit. Die Träger 63 sind in dafür vorgesehenen Aussparungen 62 einer Schutzleiste 46 angeordnet. Die Faser-Bragg-Gitter-Sensoren 51 bis 53 sind Zusammen mit den Trägern 63 in den Verbundwerkstoffkörper 62 eingebettet.

Die Figuren 8 und 9 betreffen Ausführungsbeispiele des sensornahen Teils 31 des Lichtwellenleiters 30 sowie der optischen Sensoren 51, 52 und 53. Die dargestellten Anordnungen werden dann jeweils an der Längsseite 137 des Leiterstabs 131 oder 132 zwischen den Schutzleisten 41 und 42 oder innerhalb der Schutzleisten 43, 44 und 46 oder innerhalb der Teilschutzleisten 451, 452 und 453 platziert.

Das einfachste Ausführungsbeispiel ist in Figur 8 dargestellt, bei dem der bloße Lichtwellenleiter 30 sowie die darin integrierten optischen Sensoren 51, 52 und 53 zur direkten Einbettung in eine der vorstehend genannten Schutzleisten-Konfigurationen bestimmt sind. Die gezeigten drei optischen Sensoren 51, 52 und 53 sind hierbei jeweils als Faser-Bragg-Gitter-Sensoren ausgebildet, die durch an sich bekanntes Einschreiben eines Bragg-Gitters in den Lichtwellenleiter 30 hergestellt werden. Ein solches Bragg-Gitter verändert seine optische Reflektivität unter dem Einfluss der zu erfassenden Messgröße. Im vorliegenden Fall wird mit den Faser-Bragg-Gitter-Sensoren 51 bis 53 die Temperatur an den jeweiligen Applikationsstellen an dem Leiter 13 erfasst. Die Bragg-Gitter der Faser-Bragg-Gitter-Sensoren 51 bis 53 unterscheiden sich in der Wellenlänge, bei der die Reflektivität jeweils maximal ist. Somit wird jeweils nur ein sensorspezifischer spektraler Anteil eines breitbandigen Lichtsignals LS, das auf die Faser-Bragg-Gitter-Sensoren 51 bis 53 trifft, zur Auswerteeinheit 70 zurückreflektiert. Dort werden die Messwerte sich dann anhand der genauen spektralen Lage der zurückreflektierten Anteile ermittelt.

Die Faser-Bragg-Gitter-Sensoren 51 bis 53 sind in ihrer Größe durch die Abmessungen des Lichtwellenleiters 30 bestimmt. Ein typischer Außendurchmesser eines geeigneten Lichtwellenleiters 30 liegt beispielsweise bei 125 µm. Die Längsausdehnung der Faser-Bragg-Gitter-Sensoren 51 bis 53 beträgt beispielsweise etwa 3 mm. An der Längsseite 137 des Leiters 13 ist somit lediglich das sensornahe Teil 31 des Lichtwellenleiters 31 mit den jeweils in den Lichtwellenleiter 30 integrierten Faser-Bragg-Gitter-Sensoren 51 bis 53 zu verlegen. Der räumliche Platzbedarf ist dabei nur sehr gering. Dementsprechend klein können auch die Schutzleisten 41 bis 46 ausgeführt werden.

Gemäß Figur 9 kann der Lichtwellenleiter 30 von Figur 8 zumindest in seinem sensornahen Teil 31 in ein zusätzliches Röhrchen 61 eingebracht und dann zusammen mit diesem in eine der vorstehend genannten Schutzleisten-Konfigurationen eingebettet werden. Das Röhrchen 61 besteht vorzugsweise aus Quarzglas. Es dient dem zusätzlichen mechanischen Schutz des Lichtwellenleiters 30. Der Lichtwellenleiter 30 verläuft innerhalb des Röhrchens 61 lose. Bei Bedarf kann das Röhrchen 61 aber auch mit einem spannungsfesten dielektrischen Medium gefüllt sein.

## Patentansprüche

1. Optische Messeinrichtung für ein elektrisches Gerät mit mindestens einem in eine zwei Nutseitenwände (121, 122) aufweisende Nut (12) eines Grundkörpers (11) gepressten elektrischen Leiter (13, 131, 132) aus einer Vielzahl gegeneinander isolierter Teilleiter.(133) umfassend
- mindestens einen optischen Sensor (51, 52, 53),
- mindestens einen mit dem optischen Sensor (51, 52, 53) verbundenen Lichtwellenleiter (30), über den der optische Sensor (51, 52, 53) mittels eines Lichtsignals (LS) abfragbar ist, und
- eine optisch mit dem optischen Sensor (51, 52, 53) verbundene Auswerteeinheit (70), wobei
- der optische Sensor (51, 52, 53) und ein sensornaher Teil (31) des Lichtwellenleiters (30) im Bereich der Nut (12) an einer von den beiden Nutseitenwänden (121, 122) abgewandten Längsseite (137) des elektrischen Leiters (13, 131, 132) angeordnet sind und
- an der Längsseite (137) mindestens eine von der Teilleiterisolierung gesondert ausgebildete Schutzleiste (41, 42, 43, 44, 451, 452, 453, 46) angeordnet ist.

2. Messeinrichtung nach Anspruch 1, **dadurch gekennzeichnet, dass** der optische Sensor (51, 52, 53) und der sensornahe Teil (31) des Lichtwellenleiters (30) zwischen zwei seitlich nebeneinander angeordneten Schutzleisten (41, 42) angeordnet sind.

3. Messeinrichtung nach Anspruch 1, **dadurch gekennzeichnet, dass** der optische Sensor (51, 52, 53) und der sensornahe Teil (31) des Lichtwellenleiters (30) zumindest teilweise von der Schutzleiste (43) umgeben sind.

4. Messeinrichtung nach Anspruch 2, **dadurch gekennzeichnet, dass** der optische Sensor (51, 52, 53) und der sensornahe Teil (31) des Lichtwellenleiters (30) in die Schutzleiste (44, 451, 452, 453) eingebettet sind.

5. Messeinrichtung nach Anspruch 1, **dadurch gekennzeichnet, dass** die Schutzleiste (46) eine Aussparung (62) für einen Träger (63) enthält und der optische Sensor (51, 52, 53) auf dem Träger (63) fixiert ist.

6. Messeinrichtung nach einem der vorhergehenden Ansprüche, **dadurch gekennzeichnet, dass** der optische Sensor (51, 52, 53) und der sensornahe Teil (31) des Lichtwellenleiters (30) in einem Röhrchen (61) angeordnet sind.

7. Messeinrichtung nach einem der vorhergehenden Ansprüche, **dadurch gekennzeichnet, dass** der elektrische Leiter (13, 131, 132) Bestandteil einer Stator-Wicklung (14) einer elektrodynamischen Maschine, insbesondere eines elektrischen Generators (80), ist und die Längsseite (137) des elektrischen Leiters (13, 131, 132), an der der optische Sensor (51, 52, 53) und der sensornahe Teil (31) des Lichtwellenleiters (30) angeordnet sind, einem Rotor (20) des elektrischen Generators (80) zugewandt ist.

8. Messeinrichtung nach einem der vorhergehenden Ansprüche, **dadurch gekennzeichnet, dass** der elektrische Leiter (13, 131, 132) eine äußere elektrische Isolation (134) enthält und der optische Sensor (51, 52, 53) und der sensornahe Teil (31) des Lichtwellenleiters (30) unter der äußeren elektrischen Isolation (134) angeordnet sind.

9. Messeinrichtung nach einem der vorhergehenden Ansprüche, **dadurch gekennzeichnet, dass** der optische Sensor als Faser-Bragg-Gitter-Sensor (51, 52, 53) ausgebildet ist.

10. Meßeinrichtung nach einem der vorhergehenden Ansprüche, **gekennzeichnet durch** einen als optischen Temperatursensor ausgebildeten optischen Sensor (51, 52, 53).

## Claims

1. Optical measurement device for an electrical appliance having at least one electrical conductor (13, 131, 132) which is pressed into a slot (12), which has two slot side walls (121, 122), in a base body (11), composed of a large number of conductor elements (133) which are insulated from one another, comprising
- at least one optical sensor (51, 52, 53),
- at least one optical waveguide (30), which is connected to the optical sensor (51, 52, 53) and via which the optical sensor (51, 52, 53) can be interrogated by means of a light signal (LS), and
- an evaluation unit (70) which is optically connected to the optical sensor (51, 52, 53), with
- the optical sensor (51, 52, 53) and a part (31) of the optical waveguide (30) which is close to the sensor being arranged in the region of the slot (12) on a longitudinal face (137) of the electrical conductor (13, 131, 132) facing away from the two slot side walls (121, 122), and
- at least one protective strip (41, 42, 43, 44, 451, 452, 453, 46), formed separately from the conductor element insulation, being arranged on the longitudinal face (137).

2. Measurement device according to Claim 1, **characterized in that** the optical sensor (51, 52, 53) and that part (31) of the optical waveguide (30) which is close to the sensor are arranged between two protective strips (41, 42) which are arranged laterally alongside one another.

3. Measurement device according to Claim 1, **characterized in that** the optical sensor (51, 52, 53) and that part (31) of the optical waveguide (30) which is close to the sensor are at least partially surrounded by the protective strip (43).

4. Measurement device according to Claim 2, **characterized in that** the optical sensor (51, 52, 53) and that part (31) of the optical waveguide (30) which is close to the sensor are embedded in the protective strip (44, 451, 452, 453).

5. Measurement device according to Claim 1, **characterized in that** the protective strip (46) contains a cutout (62) for a mount (63), and the optical sensor (51, 52, 53) is fixed on the mount (63).

6. Measurement device according to one of the preceding claims, **characterized in that** the optical sensor (51, 52, 53) and that part (31) of the optical waveguide (30) which is close to the sensor are arranged in a small tube (61).

7. Measurement device according to one of the preceding claims, **characterized in that** the electrical conductor (13, 131, 132) is a component of a stator winding (14) of an electrodynamic machine, in particular of an electrical generator (80), and the longitudinal face (137) of the electrical conductor (13, 131, 132) on which the optical sensor (51, 52, 53) and that part (31) of the optical waveguide (30) which is close to the sensor are arranged, faces a rotor (20) of the electrical generator (80).

8. Measurement device according to one of the preceding claims, **characterized in that** the electrical conductor (13, 131, 132) contains outer electrical insulation (134), and the optical sensor (51, 52, 53) and that part (31) of the optical waveguide (30) which is close to the sensor are arranged underneath the outer electrical insulation (134).

9. Measurement device according to one of the preceding claims, **characterized in that** the optical sensor is in the form of a fibre Bragg grating sensor (51, 52, 53).

10. Measurement device according to one of the preceding claims, **characterized by** an optical sensor (51, 52, 53) in the form of an optical temperature sensor.

## Revendications

1. Dispositif de mesure optique pour un appareil électrique ayant au moins un conducteur (13, 131, 132) électrique constitué d'une pluralité de sous-conducteurs (133) isolés mutuellement et comprimé dans une encoche (12) ayant deux parois (121, 122) latérales d'un corps (11) de base, comprenant
- au moins un capteur (51, 52, 53) optique ;
- au moins un guide (30) d'ondes lumineuses relié au capteur (51, 52, 53) optique et par lequel le capteur (51, 52, 53) optique peut être interrogé au moyen d'un signal (LS) lumineux ; et
- une unité (70) d'exploitation reliée optiquement au capteur (51, 52, 53) optique, dans lequel
- le capteur (51, 52, 53) optique et une partie (31), proche du capteur, du guide (30) d'ondes lumineuses sont disposés dans la zone de l'encoche (12) sur un côté (137) longitudinal du conducteur (13, 131, 132) électrique éloigné des deux parois (121, 122) latérales de l'encoche ; et
- au moins une baguette (41, 42, 43, 44, 451, 452, 453, 46), constituée séparément de l'isolant des sous-conducteurs, est disposée sur le côté (137) longitudinal.

2. Dispositif de mesure suivant la revendication 1, **caractérisé en ce que** le capteur (51, 52, 53) optique et la partie (31) proche du capteur du guide (30) d'ondes lumineuses sont disposés entre deux baguettes (41, 42) de protection disposées côte à côte latéralement.

3. Dispositif de mesure suivant la revendication 1, **caractérisé en ce que** le capteur (51, 52, 53) optique et la partie (31) proche du capteur du guide (30) d'ondes lumineuses sont entourés au moins en partie de la baguette (43) de protection.

4. Dispositif de mesure suivant la revendication 2, **caractérisé en ce que** le capteur (51, 52, 53) optique et la partie (31) proche du capteur du guide (30) d'ondes lumineuses sont incorporés dans la baguette (44, 451, 452, 453) de protection.

5. Dispositif de mesure suivant la revendication 1, **caractérisé en ce que** la baguette (46) de protection a un évidement (62) pour un support (63) et le capteur (51, 52, 53) optique est fixé sur le support (63).

6. Dispositif de mesure suivant l'une des revendications précédentes, **caractérisé en ce que** le capteur (51, 52, 53) optique et la partie (31), proche du capteur, du guide (30) d'ondes lumineuses sont disposés dans un petit tube (61).

7. Dispositif de mesure suivant l'une des revendications précédentes, **caractérisé en ce que** le conducteur (13, 131, 132) électrique fait partie d'un enroulement 14 statorique d'une machine électrodynamique, notamment d'une génératrice (80) électrique, et le côté (137) longitudinal du conducteur (13, 131, 132) électrique, sur lequel sont disposés le capteur (51, 52, 53) optique et la partie (31), proche du capteur, du guide (30) d'ondes lumineuses est tournée vers un rotor (20) de la génératrice (80) électrique.

8. Dispositif de mesure suivant l'une des revendications précédentes, **caractérisé en ce que** le conducteur (13, 131, 132) électrique a un isolant (134) électrique extérieur et le capteur (51, 52, 53) optique et la partie (31), proche du capteur, du guide (30) d'ondes lumineuses sont disposés sous l'isolant (134) électrique extérieur.

9. Dispositif de mesure suivant l'une des revendications précédentes, **caractérisé en ce que** le capteur optique est constitué sous la forme d'un capteur (51, 52, 53) fibre-réseau de Bragg.

10. Dispositif de mesure suivant l'une des revendications précédentes, **caractérisé par** un capteur (51, 52, 53) optique sous la forme d'un capteur optique de température.
